# EUROPEAN PATENT APPLICATION

(11) **EP 1 770 270 A2**
(43) Date of publication of application: **04.04.2007**
(21) Application number: 06121501.8
(22) Date of filing: 29.09.2006
(51) Int. Cl.: F02M 25/07, F02B 37/16

(54) **EGR system having reverse flow, internal combustion engine and method**

(30) Priority: 03.10.2005 US 242100
(71) Applicant: Deere & Company, Moline, IL 61265-8098 (US)
(72) Inventor: Evers, Matthew, Evansdale, IA 50707 (US)
(74) Representative: Löser, Iris

(57) **Abstract**

An internal combustion engine (10) includes a block (12) defining at least one combustion cylinder (14). An intake manifold (16) is fluidly coupled with at least one combustion cylinder (14), and an exhaust manifold (18) is also fluidly coupled with at least one combustion cylinder (14). An exhaust gas recirculation system is fluidly coupled between the exhaust manifold (18) and the intake manifold (16) . A turbocharger (22) includes a variable geometry turbine (32) fluidly coupled with the exhaust manifold (18). The variable geometry turbine (32) is movable to a first position effecting fluid flow of exhaust gas from the exhaust manifold (18) to the intake manifold (16), and movable to a second position effecting fluid flow of charge air to the variable geometry turbine (32).

## Description

The present invention relates to internal combustion engines, and, more particularly, to exhaust gas recirculation systems in such engines.

An internal combustion (IC) engine may include an exhaust gas recirculation (EGR) system for controlling the generation of undesirable pollutant gases and particulate matter in the operation of internal combustion engines. EGR systems primarily recirculate the exhaust gas by-products into the intake air supply of the internal combustion engine. The exhaust gas which is reintroduced to the engine cylinder reduces the concentration of oxygen therein, which in turn lowers the maximum combustion temperature within the cylinder and slows the chemical reaction of the combustion process, decreasing the formation of nitrous oxides (NOx). Furthermore, the exhaust gases typically contain unburned hydrocarbons which are burned on reintroduction into the engine cylinder, which further reduces the emission of exhaust gas by-products which would be emitted as undesirable pollutants from the IC engine.

An IC engine may also include one or more turbochargers for compressing a fluid which is supplied to one or more combustion chambers within corresponding combustion cylinders. Each turbocharger typically includes a turbine driven by exhaust gases of the engine and a compressor which is driven by the turbine. The compressor receives the fluid to be compressed and supplies the fluid to the combustion chambers. The fluid which is compressed by the compressor may be in the form of combustion air or a fuel and air mixture.

The operating behavior of a compressor within a turbocharger may be graphically illustrated by a "compressor map" associated with the turbocharger in which the pressure ratio (compression outlet pressure divided by the inlet pressure) is plotted on the vertical axes and the flow rate is plotted on the horizontal axes. In general, the operating behavior of a compressor is limited on the left side of the compressor map by a "surge lind' and on the right side of the compressor map by a "choke line".

The surge line basically represents "stalling" of the air flow at the compressor inlet. With too small a volume flow and too high a pressure ratio, the flow will separate from the suction side of the blades on the compressor wheel, with the result that the discharge process is interrupted. The air flow through the compressor is reversed until a stable pressure ratio by positive volumetric flow rate is established, the pressure builds up again and the cycle repeats. This flow instability continues at a substantially fixed frequency and the resulting behavior is known as "surging". The choke line represents the maximum centrifugal compressor volumetric flow rate, which is limited for instance by the cross-section at the compressor inlet. When the flow rate at the compressor inlet or other location reaches sonic velocity, no further flow rate increase is possible and choking results. Both surge and choking of a turbocharger compressor should be avoided.

When utilizing EGR in a turbocharged diesel engine, the exhaust gas to be recirculated is preferably removed upstream of the exhaust gas driven turbine associated with the turbocharger. In many EGR applications, the exhaust gas is diverted by a poppet-type EGR valve directly from the exhaust manifold. The percentage of the total exhaust flow which is diverted for introduction into the intake manifold of an internal combustion engine is known as the EGR rate of the engine.

It is therefore an object of the present invention to provide a EGR system overcoming one or all of the mentioned concerns respectively.

This object is met according to the invention by the teaching of claim 1, 8 or 9 respectively, while features developing the solution in an advantageous way are set forth in the further claims.

The present invention provides an EGR system which is configured such that exhaust gas is circulated to the intake manifold, or, alternatively, charge air is bypassed in a reverse direction through the EGR system to the turbocharger.

The invention may comprise, in one form thereof, an internal combustion engine including a block defining at least one combustion cylinder. An intake manifold may be fluidly coupled with at least one combustion cylinder, and an exhaust manifold is also fluidly coupled with at least one combustion cylinder. An exhaust gas recirculation system may be fluidly coupled between the exhaust manifold and the intake manifold. A turbocharger may include a variable geometry turbine fluidly coupled with the exhaust manifold, the variable geometry turbine movable to a first position effecting fluid flow of exhaust gas from the exhaust manifold to the intake manifold, and movable to a second position effecting fluid flow of charge air to the variable geometry turbine.

The invention may comprise, in another form thereof, an exhaust gas recirculation system for an internal combustion engine including an intake manifold having an inlet, an exhaust manifold having an outlet, and a turbocharger coupled with the exhaust manifold outlet. The exhaust gas recirculation system may include at least one fluid line for interconnecting the exhaust manifold outlet and the intake manifold inlet; and a pressure differential generator for selectively generating an EGR flow of exhaust gas through the at least one fluid line from the exhaust manifold outlet to the intake manifold inlet, and a reverse EGR flow of charge air through the at least one fluid line to the turbocharger.

The above-mentioned and other features and advantages of this invention, and the manner of attaining them, will become more apparent and the invention will be better understood by reference to the following description of embodiments of the invention taken in conjunction with the accompanying drawings, wherein:
- Fig. 1: is a schematic illustration of an embodiment of an internal combustion engine of the present invention; and
- Fig. 2: is a graphical illustration of a compressor map for the turbocharger shown in Fig. 1, illustrating the effect of the present invention on the compressor map.

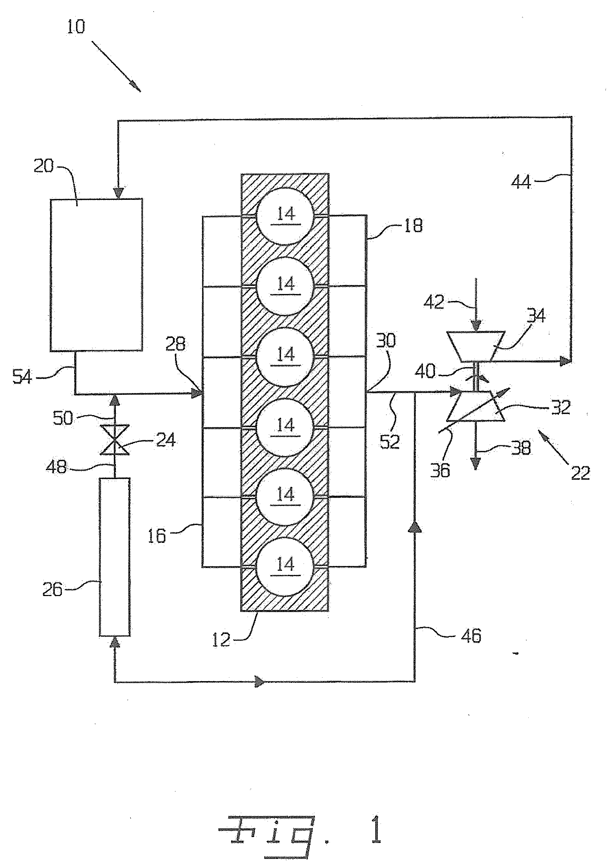

Referring now to the drawings, and more particularly to Fig. 1, there is shown an embodiment of an IC engine 10 of the present invention, which generally includes a block 12 having a plurality of combustion cylinders 14, intake manifold 16, exhaust manifold 18, charge air cooler 20, turbocharger 22, EGR valve 24 and EGR cooler 26. In the embodiment shown, IC engine 10 is a diesel engine which is incorporated into a work machine, such as an agricultural tractor or combine, but may be differently configured, depending upon the application.

Block 12 is typically a cast metal block which is formed to define combustion cylinders 14. In the embodiment shown, block 12 includes six combustion cylinders 14, but may include a different number depending upon the application. Intake manifold 16 and exhaust manifold 18 are also typically formed from cast metal, and are coupled with block 12 in conventional manner, such as by using bolts and gaskets. Intake manifold 16 and exhaust manifold 18 are each in fluid communication with combustion cylinders 14. Intake manifold 16 receives charge air from charge air cooler 20 at intake manifold inlet 28, and supplies charge air (which may be air or a fuel/air mixture) to combustion cylinders 14, such as by using fuel injectors (not shown).

Similarly, exhaust manifold 18 is in fluid communication with combustion cylinders 14, and includes an outlet 30 from which exhaust gas from combustion cylinders 14 is discharged to turbocharger 22.

Turbocharger 22 includes a variable geometry turbine (VGT) 32 and a compressor 34. VGT 32 is adjustably controllable as indicated by line 36, and includes an actuatable element which is controlled electronically using a controller (not shown). For example, VGT 32 may be actuated by changing the position of turbine blades, a variable size orifice, or other actuatable elements. The turbine within VGT 32 is driven by exhaust gas from exhaust manifold 18, and is exhausted to the environment, as indicated by arrow 38.

VGT 32 mechanically drives compressor 34 through a rotatable shaft 40. Compressor 34 is a fixed geometry compressor in the embodiment shown. Compressor 34 receives combustion air from the ambient environment as indicated by line 42, and discharges the compressed combustion air via line 44 to charge air cooler 20. As a result of the mechanical work through the compression of the combustion air, the heated charge air is cooled in charge air cooler 20 prior to being introduced at inlet 28 of intake manifold 16.

EGR valve 24 and EGR cooler 26 are part of an EGR system which also includes a first fluid line 46, second fluid line 48 and third fluid line 50. The term fluid line, as used herein, is intended broadly to cover a conduit for transporting a gas such as exhaust gas and/or combustion air, as will be understood hereinafter.

First fluid line 46 is coupled at one end thereof with a fluid line 52 interconnecting exhaust manifold outlet 30 with VGT 32. First fluid line 46 is coupled at an opposite end thereof with EGR cooler 26. Second fluid line 48 fluidly interconnects EGR cooler 26 with EGR valve 24. Third fluid line 50 fluidly interconnects EGR valve 24 with fluid line 54 extending between charge air cooler 20 and inlet 28 of intake manifold 16.

In the embodiment shown in Fig. 1, first fluid line 46 is fluidly coupled with fluid line 52 extending between exhaust manifold 18 and VGT 32. However, it will also be understood that first fluid line 46 may be fluidly coupled directly with exhaust manifold 18 for certain applications. Similarly, third fluid line 50 is fluidly coupled with fluid line 54 interconnecting charge air cooler 20 and inlet 28 of intake air manifold 16. However, it will also be understood that third fluid line 50 may be coupled directly with intake air manifold 16 in certain applications.

During operation, IC engine 10 is operated to recirculate a selective amount of exhaust gas from exhaust manifold 18 to intake manifold 16 using an EGR system defined by first fluid line 46, EGR cooler 26, second fluid line 48, EGR valve 24 and third fluid line 50. The EGR system could also be defined by first fluid line 46, EGR valve 24, second fluid line 48, EGR cooler 26, and third fluid line 50, in that order connecting fluid line 52 to fluid line 54. A controller selectively actuates EGR valve 24 to provide EGR flow of the exhaust gas in the EGR flow direction indicated by the large directional arrows on first fluid line 46 and third fluid line 50.

Conversely, the EGR system is also configured to provide a reverse flow of fluid in the form of charge air from fluid line 54 to fluid line 52 leading to VGT 32. More particularly, VGT 32 may be controllably actuated to provide a pressure within fluid line 52 which is less than the pressure within fluid line 54. When EGR valve 24 is opened, charge air thus flows from fluid line 54 through EGR valve 24 and EGR cooler 26 to fluid line 52, and ultimately to VGT 32. Under certain operating conditions, it is desirable to mix cooled charge air with the exhaust which is discharged from outlet 30 of exhaust manifold 18. The reverse flow direction of charge air through the EGR system is indicated by the smaller directional arrows on second fluid line 48 and first fluid line 46.

Conventional operation of an EGR system deactivates the EGR system, or prevents any through flow, during engine operating conditions when no EGR flow is desired. On the other hand, the present invention utilizes an EGR system in a reverse flow mode to bypass fresh air around combustion cylinders 14 to VGT 32 during appropriate engine operating conditions when no EGR flow is desired. For this reverse flow to occur, it is apparent that VGT 32 is configured in a way to obtain a positive engine delta pressure (higher intake manifold pressure than exhaust manifold pressure). The process of configuring the turbocharger to obtain a positive engine delta pressure also allows a more efficient operation of turbocharger 22.

The present invention has been shown to provide improved fuel efficiency, air to fuel ratio, smoke emissions, and compressor surge margin, as well as reduce exhaust temperatures, at low to intermediate engine speeds when IC engine 10 is delivering moderate to high torque output. Due to these engine performance improvements, maximum engine output torque at certain engine speeds can also be increased, if desired.

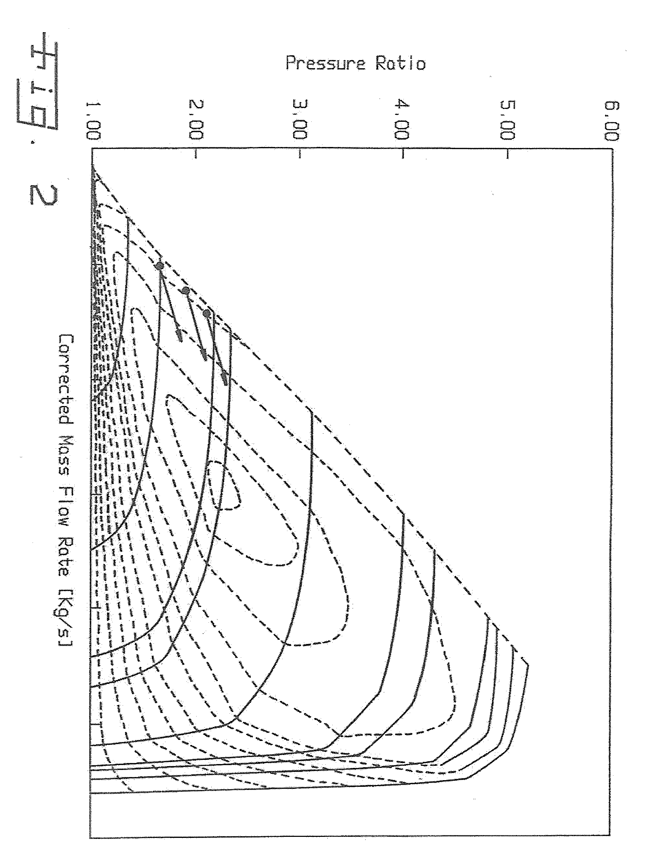

Fig. 2 is a graphical illustration of a compressor map for compressor 34 of turbocharger 22 when using EGR reverse flow of the present invention as described above. The left most line on the curve represents the surge line of the compressor. Using EGR reverse flow with the present invention, the operating point is shifted upward and to the right away from the surge line, as indicated by any particular one of the three arrows. This effectively reduces the possibility of surge of compressor 34 of turbocharger 22.

In the embodiment of the present invention described above, IC engine 10 includes a VGT 32 which is controlled to provide a delta engine pressure between intake manifold 16 and exhaust manifold 18 allowing reverse flow through the EGR system. However, it is also possible to use a pressure differential generator in the form of a differently configured turbocharger, such as a turbocharger with a wastegate, a multiple turbocharger system, a multi-stage turbocharger system, or even a fixed geometry turbocharger at low engine speeds.

Having described the preferred embodiment, it will become apparent that various modifications can be made without departing from the scope of the invention as defined in the accompanying claims.

## Claims

1. An exhaust gas recirculation system for an internal combustion engine (10), the internal combustion engine (10) including an intake manifold (16) having an inlet (28), an exhaust manifold (18) having an outlet (30), and a turbocharger (22) coupled with the exhaust manifold outlet (30), said exhaust gas recirculation system comprising at least one fluid line (46, 48, 50) for interconnecting said exhaust manifold outlet (30) and said intake manifold inlet (28); **characterized by** a pressure differential generator for selectively generating an EGR flow of exhaust gas through said at least one fluid (46, 48, 50) line from the exhaust manifold outlet (30) to the intake manifold inlet (28), and a reverse EGR flow of charge air through said at least one fluid line to the turbocharger (22).

2. The exhaust gas recirculation system according to claim 1, **characterized in that** said pressure differential generator comprises a turbocharger (22) including a variable geometry turbine (32) fluidly couplable with said exhaust manifold outlet (30), said variable geometry turbine (32) movable to a first position for effecting fluid flow of exhaust gas from the exhaust manifold outlet (30) to the intake manifold inlet (28), and movable to a second position for effecting fluid flow of charge air to the variable geometry turbine (32).

3. The exhaust gas recirculation system according to claim 1 or 2, **characterized in that** when said variable geometry turbine (32) is in said second position, said charge air is mixed with exhaust gas from the exhaust manifold outlet (30).

4. The exhaust gas recirculation system according to one or several of the previous claims, **characterized in that** said exhaust gas recirculation system includes an EGR valve (24) and an EGR cooler (26).

5. The exhaust gas recirculation system according to one or several of the previous claims, **characterized in that** said EGR valve (24) is fluidly coupled with said intake manifold (16), and said EGR cooler (26) is fluidly coupled between said exhaust manifold (18) and said EGR valve (24).

6. The exhaust gas recirculation system according to one or several of the claims 2 to 5, **characterized in that** said exhaust manifold (18) includes an outlet (30) and said intake manifold (16) includes an inlet (28), and when said variable geometry turbine (32) is in said first position there exists a higher pressure at said exhaust manifold outlet (30) than at said intake manifold inlet (28), and when said variable geometry turbine (32) is in said second position there exists a higher pressure at said intake manifold inlet (28) than at said exhaust manifold outlet (30).

7. The exhaust gas recirculation system according to one or several of the claims 2 to 6, **characterized in that** said exhaust manifold (18) includes an outlet (30) and said intake manifold (16) includes an inlet (28), and said variable geometry turbine (32) selectively creates a pressure differential between said exhaust manifold outlet (30) and said intake manifold inlet (28).

8. An internal combustion engine (10), comprising a block (12) defining at least one combustion cylinder (14); an intake manifold (28) fluidly coupled with at least one said combustion cylinder (14); an exhaust manifold (30) fluidly coupled with at least one said combustion cylinder (14); **characterized by** an exhaust gas recirculation system according to one or several of the previous claims fluidly coupled between said exhaust manifold (18) and said intake manifold (16).

9. A method of operating an internal combustion engine according to claim 8, said method comprising the step of selectively actuating a pressure differential generator for selectively generating an EGR flow of exhaust gas through at least one fluid line (46, 48, 50) from an exhaust manifold outlet (30) to an intake manifold inlet (28), and a reverse EGR flow of charge air through said at least one fluid line to a turbocharger (22).

10. The method according to claim 9, wherein said selectively actuating step comprises actuating a variable geometry turbine (32) in a turbocharger (22) fluidly coupled with said exhaust manifold outlet (30), said variable geometry turbine (32) movable to a first position effecting said EGR flow of exhaust gas, and movable to a second position effecting said reverse EGR flow of charge air.

11. The method of operating an internal combustion engine according to claim 9 or 10, wherein when said variable geometry turbine (32) is in said second position, said charge air is mixed with exhaust gas from said exhaust manifold outlet (30).
